# EUROPEAN PATENT APPLICATION

(11) **EP 4 546 260 A1**
(43) Date of publication of application: **30.04.2025**
(21) Application number: 23827413.8
(22) Date of filing: 08.06.2023
(51) Int. Cl.: G06T 7/11, G06V 10/25, G06F 3/0482

(54) **IMAGE PROCESSING APPARATUS AND IMAGE PROCESSING METHOD**

(30) Priority: 22.06.2022 KR 20220076378
(71) Applicant: Medit Corp., Seoul 07207 (KR)
(72) Inventor: KIM, Jin Young, Seoul 07207 (KR); KIM, Dusu, Seoul 07207 (KR)
(74) Representative: Taor, Simon Edward William
(86) International application number: PCT/KR2023/007868
(87) International publication number: WO 2023/249293

(57) **Abstract**

Disclosed embodiments relate to an image processing method and an image processing apparatus. The image processing method according to an embodiment may include obtaining scan data generated by scanning a target object including an object of interest, automatically setting a region of interest corresponding to the object of interest, in the scan data, and displaying the region of interest.

## Description

### Technical Field

Embodiments disclosed herein relate to an image processing apparatus and an image processing method, and more particularly, to an image processing apparatus and a processing method, for automatically setting a region of interest corresponding to an object of interest in a scan image of a target object including the object of interest.

### Background Art

There may be some cases in which teeth inevitably have to be extracted, for example, when teeth are severely damaged due to aging, periodontitis, terrible cavities, or external shocks. When teeth are extracted and no more additional treatment is performed, it is likely to have a negative impact on adjacent teeth as the adjacent teeth lie in empty spaces or move to the empty spaces. Accordingly, it is necessary to put implants in regions where the teeth are defective.

An implant may include a fixture, an abutment, and a crown. A fixture, which is a structure corresponding to the root of a natural tooth, is input to the gum bone. An abutment, which is an interconnection part that connects the fixture and the crown to each other, is exposed outside a gum. In addition, the crown, which is a final prosthetic appliance, indicates the portion that appears as a tooth.

The crown is designed based on scan data about the abutment. In this case, the abutment may be fixed to a jig by an adhesive member, and then scanning may be performed to obtain scan data. The obtained scan data also includes scan data regarding the adhesive member or the jig in addition to the abutment, and to perform image processing on the abutment, it is necessary to set a region corresponding to the abutment as a region of interest. When the region of interest corresponding to the abutment is manually set, it is inconvenient as the user must manually select an abutment region from the scan data, and the abutment region cannot be accurately selected.

### Disclosure of Invention

### Technical Problem

Disclosed embodiments are to provide an image processing method for automatically setting a region of interest corresponding to an object of interest from scan data when a target object including the object of interest, and an apparatus performing operations according to the image processing method.

### Solution to Problem

An image processing method according to an embodiment may include obtaining scan data generated by scanning a target object including an object of interest, automatically setting a region of interest corresponding to the object of interest from the scan data, and displaying the region of interest.

### Advantageous Effects of Invention

In an image processing apparatus and an oral-cavity image processing method according to disclosed embodiments, it is not required to manually set a region of interest corresponding to an object of interest from obtained scan data or scan image.

Accordingly, when an abutment attached to a jig by an adhesive member is scanned, a user does not have to additionally set a region of interest corresponding to the abutment in scan data, and therefore, convenience of the user may be improved.

In addition, as it is not required to manually set regions of interest for all of objects of interest in scan data generated by scanning the objects of interest, convenience of the user may be improved.

### Brief Description of Drawings

The present disclosure may be easily understood based on combination of the following detailed descriptions and the accompanying drawings, and reference numerals indicate structural elements.
FIG. 1 is a diagram for describing an image processing system according to a disclosed embodiment.
FIG. 2 is a flowchart illustrating an image processing method according to an embodiment.
FIGS. 3A to 3C are diagrams to be referred to to explain a method by which an image processing apparatus automatically sets a region of interest in scan data, according to an embodiment.
FIGS. 4 to 9 are diagrams illustrating a method by which an image processing apparatus automatically sets a region of interest, according to an embodiment.
FIG. 10 is a diagram illustrating a screen in which a plurality of abutments according to an embodiment are scanned.
FIG. 11 is a block diagram illustrating an image processing apparatus according to an embodiment.

### Best Mode for Carrying out the Invention

An image processing method according to an embodiment may include obtaining scan data generated by scanning a target object including an object of interest, automatically setting a region of interest corresponding to the object of interest, in the scan data, and displaying the region of interest.

The object of interest according to an embodiment may include an abutment.

The target object according to an embodiment may further include another object other than the abutment.

The image processing method according to an embodiment may further include receiving a user input to select a menu for automatically setting the region of interest.

The automatic setting of the region of interest, according to an embodiment, may include obtaining a first diameter corresponding to first scan data from an uppermost point of the target object to a first position apart by a first distance in a depth direction from the uppermost point, obtaining a second diameter corresponding to second scan data from the uppermost point to a second position apart by a second distance greater than the first distance in the depth direction from the uppermost point, and setting a region from the uppermost point to the second position as the region of interest, based on the first diameter and the second diameter.

The setting of the region from the uppermost point to the second position as the region of interest, based on the first diameter and the second diameter, according to an embodiment, may include obtaining a first value, based on the first diameter, and setting the region from the uppermost point to the second position as the region of interest, when the second diameter is less than a smaller value among the first value and a preset second value.

The setting of the region from the uppermost point of the target object to the second position as the region of interest, based on the first diameter and the second diameter, according to an embodiment, may include obtaining a third diameter obtaining a third diameter corresponding to third scan data from the uppermost point to a third position apart by a third distance from the uppermost point, when the second diameter is greater than or equal to the smaller value among the first value and the second value, wherein the third distance is greater than the first distance and less than the second distance, and setting the region of interest, based on the first diameter and the third diameter.

The setting of the region of interest, according to an embodiment, may include setting a region from the uppermost point to the third position as the region of interest, when the third diameter is less than the smaller value among the first value and the second value, and setting a region from the uppermost point to the first position as the region of interest, when the third diameter is equal to or greater than the smaller value among the first value and the second value.

The displaying of the region of interest, according to an embodiment, may include displaying the region of interest in the scan data so as to be distinguished from other regions.

An image processing apparatus according to an embodiment may include a display, a memory storing one or more instructions, and a processor, wherein the processor is configured to, by executing the one or more instructions stored in the memory, obtain scan data generated by scanning a target object including an object of interest, automatically set a region of interest corresponding to the object of interest, in the scan data, and control the display to display the region of interest.

### Mode for the Invention

The present specification describes the principle of the present disclosure and discloses embodiments to clarify the scope of the present disclosure and allow those skilled in the art to implement the present disclosure. Embodiments disclosed herein may be implemented in various forms.

Throughout the specification, same reference numerals indicate same components. The present specification does not describe all components in the embodiments, and common descriptions in the technical field or repeated descriptions between the embodiments will be omitted. Terms 'part', 'portion' used in the specification may be implemented as software or hardware, and according to embodiments, a plurality of 'parts' may be implemented as a unit or element, or a 'part' may include a plurality of elements. Hereinafter, principles and embodiments of the present disclosure will be described with reference to the accompanying drawings.

In the present specification, an image may include an image illustrating at least one tooth or an oral cavity including at least one tooth.

In addition, in the present specification, an image may include a two-dimensional image of a target object, or may include a three-dimensional model or a three-dimensional image three-dimensionally illustrating the target object. Furthermore, in the present specification, an image may indicate data necessary for two-dimensionally or three-dimensionally expressing the target object, e.g., raw data obtained from at least one image sensor. More particularly, the raw data, i.e., data obtained to generate the image, may include data (e.g., two-dimensional data) obtained from at least one image sensor included in a three-dimensional scanner when the target object is scanned by using the three-dimensional scanner.

In the present specification, the term 'target object' may include a tooth, a gum, and at least a region of an oral cavity, and/or an artificial structure (e.g., an orthodontic appliance, an implant, an artificial tooth, an orthodontic auxiliary tool inserted into an oral cavity, and the like) that may be inserted into the oral cavity. Here, the orthodontic appliance may include at least one of a bracket, an attachment, an orthodontic screw, a lingual orthodontic tool, and a removable retainer.

Hereinafter, the embodiments will be described in detail with reference to the accompanying drawings.

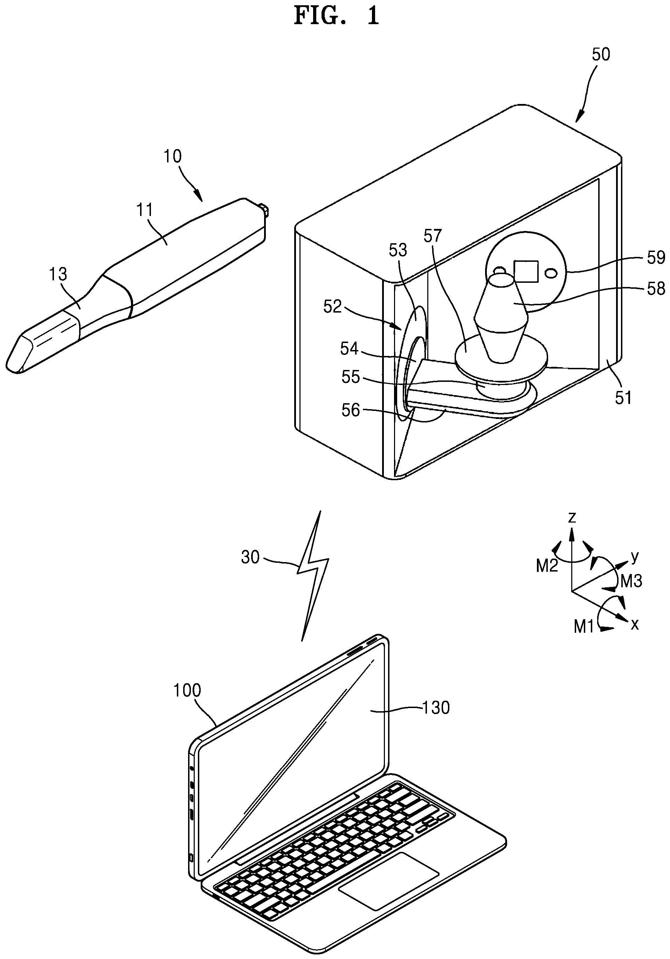

FIG. 1 is a diagram to describe an image processing system according to an embodiment disclosed herein.

Referring to FIG. 1, the image processing system includes three-dimensional scanners 10 and 50 and an image processing apparatus 100. The three-dimensional scanners 10 and 50 and an image processing apparatus 100 may be configured to perform communication through a communication network 30.

The three-dimensional scanners 10 and 50, which are apparatuses configured to scan a target object, may include a medical instrument configured to obtain images of the target object.

The three-dimensional scanners 10 and 50 may obtain an image of at least one of an oral cavity, an artificial structure, or a plaster model obtained by molding the oral cavity or the artificial structure.

The three-dimensional scanners 10 and 50 may include at least one of an oral cavity scanner 10 and a table scanner 50.

In embodiments, the three-dimensional scanners 10 and 50 may include the oral cavity scanner 10. The oral cavity scanner 10 may be of a handheld type for the user to hold with the hand and scan the oral cavity. The oral cavity scanner 10 may obtain an image of an oral-cavity including at least a tooth by being inserted into the oral cavity and scanning the teeth in a non-contact manner. In addition, the oral cavity scanner 10 may have a form that may be inserted into/withdrawn out of the oral cavity, and may scan inside of an oral cavity of a patient by using at least one image sensor (e.g., an optical camera).

The oral cavity scanner 10 may include a main body 11 and a tip 13. The main body 11 may include a light projector (not shown) configured to project light and a camera (not shown) configured to obtain images by capturing the target object.

The tip 13, which is a portion inserted into the oral cavity, may be mounted in the main body 11 in a detachable structure. The tip 13 may include an optical path changer, and therefore, may have light projected from the main body 11 move toward the target object and have light received from the target object move to the main body 11.

The oral cavity scanner 10 may obtain, as the raw data, surface information of the target object for imaging a surface of at least one of the tooth and the gum in the oral cavity and the artificial structure that may be inserted into the oral cavity (e.g., an orthodontic appliance including a bracket and a wire, an implant, an artificial tooth, an orthodontic auxiliary tool inserted into the oral cavity, and the like).

In the embodiment, the three-dimensional scanners 10 and 50 may include the table scanner 50. The table scanner 50 may include a scanner configured to obtain surface information about a target object 58 as raw data by scanning the target object 58 by using rotation of the table 57. The table scanner 50 may be configured to scan a surface of the target object 58, e.g., a plaster model or an impression model obtained by molding the oral cavity, an artificial structure that may be inserted into the oral cavity, or a plaster model or an impression model obtained by molding the artificial structure.

The table scanner 50 may include an internal space recessed in a direction into the housing 51. A transport portion 52, on which the target object 58 may be mounted and which is capable of transporting the target object 58, may be formed on a side surface of the internal space. The transport portion 52 may move in a vertical direction in a z axis direction. The transport portion 52 may include a fixing base 53 connected to a first rotating portion 54, the first rotating portion 54 that may rotate in a first rotation direction M1 having a point on the fixing base 53, e.g., an x axis, as a central axis, and a beam portion 56 connected to the first rotating portion 54 and formed by protruding from the first rotating portion 54. The beam portion 56 may extend or shrink in an x axis direction.

A second rotating portion 55 having a cylinder shape, which may rotate in a second rotation direction M2 having the z axis as a rotation axis, may be combined to another end of the beam portion 56. The table 57 rotating with the second rotation portion 55 may be formed on a surface of the second rotation portion 55.

An optical portion 59 may be formed in the internal space. The optical portion 59 may include a light projector, which is configured to project pattern light to the target object 58, and at least one camera configured to receive light reflected from the target object 58 and obtaining a plurality of two-dimensional frames. The optical portion 59 may further include, in a state of being combined to the side surface of the internal space, a second rotating portion (not shown) that rotates having a center of the light projector (not shown) as a rotation axis. The second rotating portion may be configured to rotate the light projector, a first camera, and a second camera in a third rotation direction M3.

The three-dimensional scanners 10 and 50 may transmit the obtained raw data to the image processing apparatus 100 through the communication network 30. The image data obtained from the three-dimensional scanners 10 and 50 may be transmitted to the image processing apparatus 100 connected to the three-dimensional scanners 10 and 50 through the wired or wireless communication network 30.

The image processing apparatus 100 may include any electronic apparatuses connected to the three-dimensional scanners 10 and 50 through the wired or wireless communication network 30 and configured to receive two-dimensional images obtained by scanning the target object from the three-dimensional scanners 10 and 50 and generate, process, display, and/or transmit images based on the received two-dimensional images.

The image processing apparatus 100 may include a computing device such as a smart phone, a laptop computer, a desktop computer, a personal digital assistant (PDA), a tablet PC, and the like, but is not limited thereto. In addition, the oral cavity-image processing apparatus 100 may also exist in the form of a server (or a server device) configured to process oral images.

The image processing apparatus 100 may be configured to generate information by processing two-dimensional image data received from the three-dimensional scanners 10 and 50 or generate images by processing the two-dimensional image data. In addition, the image processing apparatus 100 may be configured to display the generated information and images through a display 130.

In addition, the three-dimensional scanners 10 and 50 may be configured to transmit raw data, which is obtained through scanning, directly to the image processing apparatus 100. In this case, the image processing apparatus 100 may be configured to generate a three-dimensional oral-cavity image three-dimensionally illustrating the oral cavity based on the received raw data. The image processing apparatus 100 according to an embodiment may generate three-dimensional data (e.g., surface data, mesh data, and the like) three-dimensionally illustrating a shape of a surface of the target object, based on the received raw data.

In addition, the 'three-dimensional image' may be generated by three-dimensionally modeling the target object based on the received raw data, and thus may also be referred to as 'a three-dimensional model'. Hereinafter, models or images two-dimensionally or three-dimensionally indicating the target object will be collectively referred to as 'images'.

In addition, the image processing apparatus 100 may be configured to analyze or process the generated image, or transmit the generated image to the display and/or the external device.

As another example, the three-dimensional scanners 10 and 50 may be configured to obtain the raw data by scanning the target object, generate an image corresponding to the target object by processing the obtained raw data, and transmit the generated image to the image processing apparatus 100. In this case, the image processing apparatus 100 may analyze, process, display, and/or transmit the received image.

In embodiments disclosed herein, the image processing apparatus 100 includes an electronic apparatus configured to generate and display images three-dimensionally illustrating the target object, and detailed descriptions thereof will be given hereinafter.

When the image processing apparatus 100 according to an embodiment receives raw data generated by scanning the target object from the three-dimensional scanners 10 and 50, the image processing apparatus may generate a three-dimensional image (or a three-dimensional model) by processing the received raw data. For convenience of explanation, hereinafter, the three-dimensional image for the object, which is generated by the image processing apparatus 100, will be referred to as 'scan data'.

For example, the three-dimensional scanners 10 and 50 may be configured to scan a target object including an object of interest. In embodiments of the present disclosure, it is described that the object of interest is an abutment and the object is a model in which the abutment is attached to a jig and the like, but the present disclosure is not limited thereto. An abutment refers to a structure connecting a fixture included in an implant to a crown. The three-dimensional scanners 10 and 50 according to an embodiment may be configured to scan the model in which the abutment is attached to the jig and the like, and accordingly, the image processing apparatus 100 according to an embodiment may be configured to obtain scan data about the model including the abutment. The image processing apparatus 100 may be configured set a region corresponding to the abutment, in the obtained scan data, as the region of interest, and perform image processing on the abutment by using scan data corresponding to the region of interest.

A method of setting a region of the scan data corresponding to the object of interest, as the region of interest, will be described in detail with reference to the following drawings.

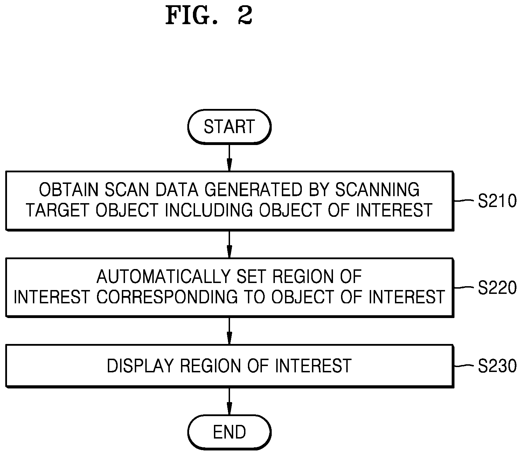

FIG. 2 is a flowchart illustrating an image processing method according to an embodiment.

The image processing method illustrated in FIG. 2 may be performed by the image processing apparatus 100.

Referring to FIG. 2, the image processing apparatus 100 according to an embodiment may obtain the scan data generated by scanning the target object including the object of interest (S210).

The image processing apparatus 100 may be configured to receive the raw data obtained by the three-dimensional scanners 10 and 50. For example, the image processing apparatus 100 may be configured to obtain the raw data by scanning the abutment fixed to the jig through an adhesive member, by using the table scanner 50. Alternatively, the image processing apparatus 100 may be configured to obtain the raw data by scanning the abutment arranged in the oral cavity by using the oral cavity scanner 10.

The image processing apparatus 100 may be configured to generate the scan data based on the received raw data. Alternatively, the image processing apparatus 100 may retrieve the scan data stored in a memory.

The image processing apparatus 100 according to an embodiment may be configured to automatically set, in the scan data, the region of interest corresponding to the object of interest (S220).

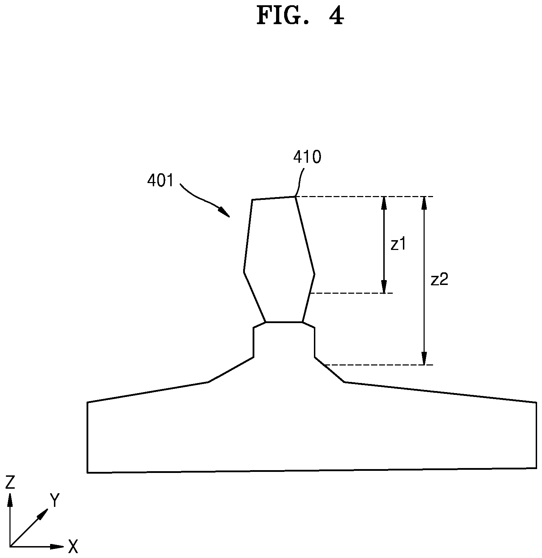

For example, when the scan data includes data about the adhesive member or the jig in addition to the abutment, the image processing apparatus 100 may automatically set a region in the scan data, which corresponds to the abutment, as the region of interest. A method of automatically setting the region corresponding to the abutment as the region of interest by the image processing apparatus 100 will be further described later with reference to FIGS. 4 to 9.

The image processing apparatus 100 according to an embodiment may display the region of interest (S230).

The image processing apparatus 100 may only display scan data set as the region of interest on a screen, from the scan data about the target object, without displaying other regions. Alternatively, the image processing apparatus 100 may be configured to display the scan data about the target object on the screen and display the region of interest so as to be distinguished from other regions. For example, the image processing apparatus 100 may display a color of the region of interest to be different from a color of the other regions, or may display a boundary of the region of interest. However, the image processing apparatus 100 is not limited thereto and may display the region of interest through various methods.

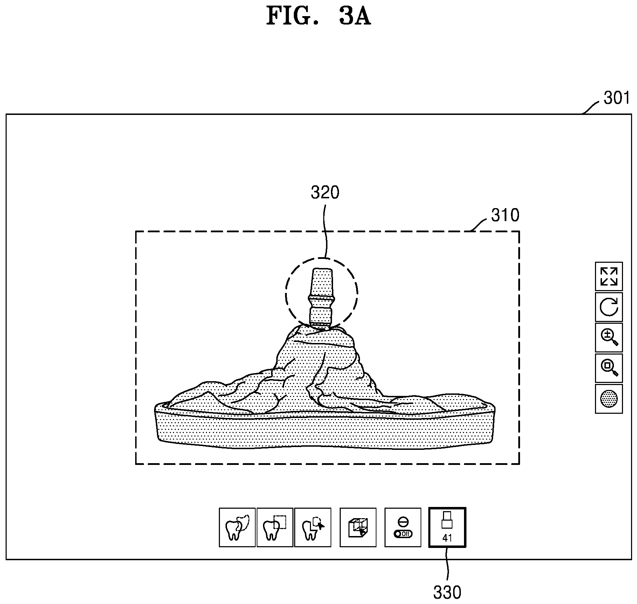

FIGS. 3A to 3C are diagrams referred to describe the method by which the image processing apparatus 100 automatically sets the region of interest in scan data, according to an embodiment.

The image processing apparatus 100 according to an embodiment may generate the scan data, based on the raw data obtained by the three-dimensional scanners 10 and 50. In addition, the image processing apparatus 100 may visibly output scan data 310 generated through a user interface screen 301. The user interface screen 301 may include a screen of the display 130 illustrated in FIG. 1. The user interface screen 301 may include at least one menu to allow the user to analyze or process the scan data 310.

Referring to FIG. 3A, the scan data 310 may include scan data based on the raw data obtained by the table scanner 50. For example, the scan data 310 may include the scan data obtained by fixing the abutment to the jig by using the adhesive member and scanning the abutment fixed to the jig by using the table scanner 50. However, the embodiment is not limited thereto, and the scan data may also be obtained by scanning the abutment arranged in the oral cavity by using the oral cavity scanner 10.

The scan data 310 according to an embodiment includes the data about the adhesive member or the jig in addition to the abutment, and it is needed that only scan data 320 of the abutment in the scan data 310 is set as the region of interest.

The image processing apparatus 100 according to an embodiment may automatically set the region of interest corresponding to the abutment in the scan data 310. For example, referring to FIG. 3A, the image processing apparatus 100 may display, on the user interface screen 301, a menu item by which the region of interest may be automatically set. When a user input selecting the menu item 330 is received, the image processing apparatus 100 may automatically set the region of interest in the scan data 310. For example, the image processing apparatus 100 may automatically set a region 320 corresponding to the abutment, which is included in the scan data 310, as the region of interest.

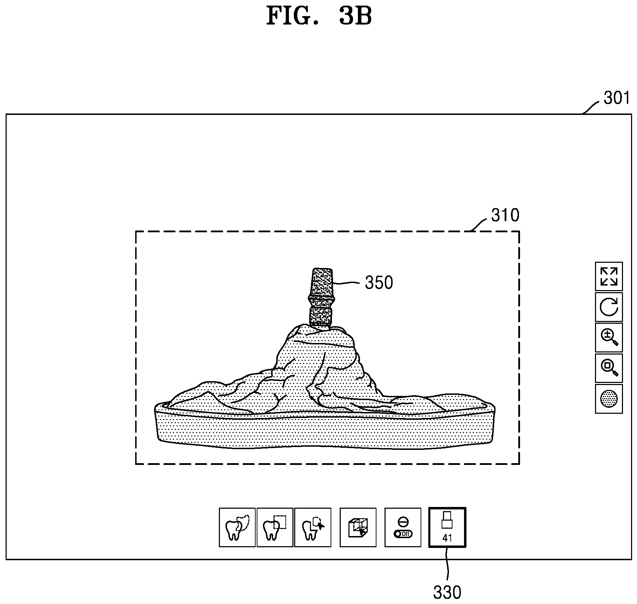

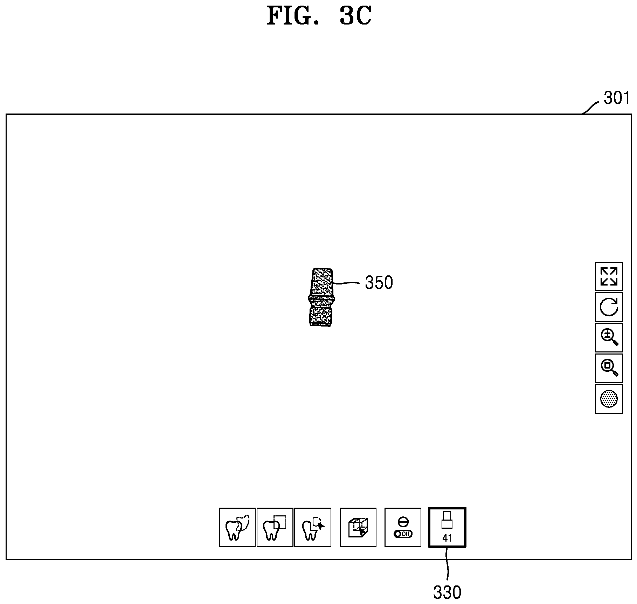

When the region of interest is set, the image processing apparatus 100 may display the region of interest so as to be distinguished from the other regions. For example, referring to FIG. 3B, the image processing apparatus 100 may display scan data 350, which corresponds to the region of interest that is set, in a color different from colors of the other regions. Alternatively, as illustrated in FIG. 3C, the image processing apparatus 100 may only display the scan data 350 of the region of interest in the scan data 310, without displaying scan data about the other regions except the region of interest.

In FIGS. 3A to 3C, it is described that the region of interest is automatically set in the scan data when a menu item for automatically setting the region of interest is selected, but the embodiment is not limited thereto.

Even without user inputs to select the menu item 330, the image processing apparatus 100 according to an embodiment may only display scan data about the region of interest corresponding to the abutment when displaying the scan data obtained by the three-dimensional scanners 10 and 50.

The image processing apparatus 100 according to an embodiment may be configured to automatically set the region of interest corresponding to the abutment and perform various types of image processing by using the set region of interest.

For example, when the image processing apparatus 100 applies data about the abutment to scanned oral-cavity data, the image processing apparatus 100 may apply scan data about the region of interest that has been automatically set (data about the abutment) to the oral-cavity data. Accordingly, the user does not have to manually select data about the abutment to be applied to the oral-cavity data.

In addition, when the image processing apparatus 100 performs image processing to fill holes included in the abutment, the image processing apparatus 100 may perform image processing based on the scan data about the region of interest that has been automatically set. However, the embodiments are not limited thereto, and the image processing apparatus 100 may perform various types of image processing by using the set region of interest.

FIGS. 4 to 9 are diagrams illustrating the method by which the image processing apparatus of automatically sets the region of interest, according to an embodiment.

Referring to FIG. 4, the image processing apparatus 100 according to an embodiment may obtain scan data 401 including the abutment, and may set the region of interest corresponding to the abutment in the scan data 401.

For example, the image processing apparatus 100 may determine a uppermost point 410 (e.g., having a peak having a greatest z value in the z axis direction) in the scan data 401 and obtain a first diameter corresponding to first scan data from the uppermost point 410 to a first position apart by a preset first distance z1 in the z axis direction (a depth direction) from the uppermost point 410.

In addition, the image processing apparatus 100 may obtain a second diameter corresponding to a second scan data from the uppermost point 410 to a second position apart by a preset second distance z2 in the z axis direction from the uppermost point 410.

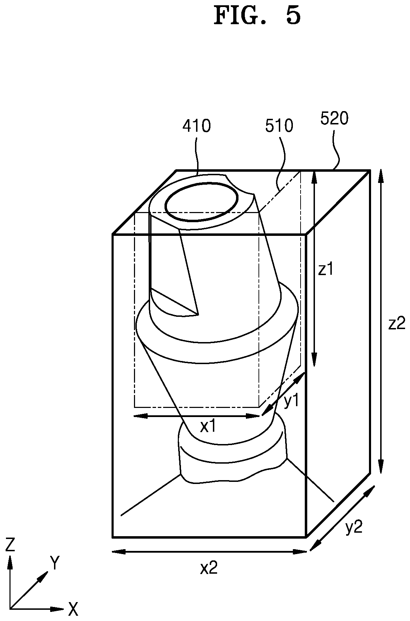

A method of obtaining the first diameter and the second diameter will be described in detail with reference to FIG. 5.

Referring to FIG. 5, the image processing apparatus 100 may obtain a first bounding box 510 for the first scan data from the uppermost point 410 to the first position and determine a greater value between a size x1 in the x axis direction or a size y1 in a y axis direction of the first bounding box 510 as the first diameter. Alternatively, the image processing apparatus 100 may obtain a second bounding box 520 for the second scan data from the uppermost point 410 to the second point and determine a greater value between a size x2 in the x direction or a size y2 in the y direction of the second bounding box 520 as the second diameter. However, the embodiment is not limited thereto.

The image processing apparatus 100 according to an embodiment may determine the region of interest, based on the first diameter and the second diameter.

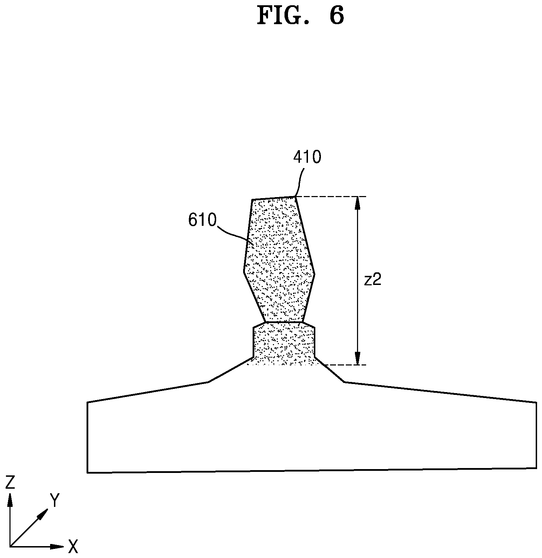

For example, the image processing apparatus 100 may obtain a first value, based on the first diameter, and compare a smaller value among the first value and a preset second value with the second diameter. More particularly, the image processing apparatus 100 may obtain the first value that is generated by multiplying a preset constant value to the first diameter. When the second diameter is less than the smaller value among the first value and the second value, the image processing apparatus 100 may set a region 610 from the uppermost point 410 to the second position as the region of interest, as illustrated in FIG. 6.

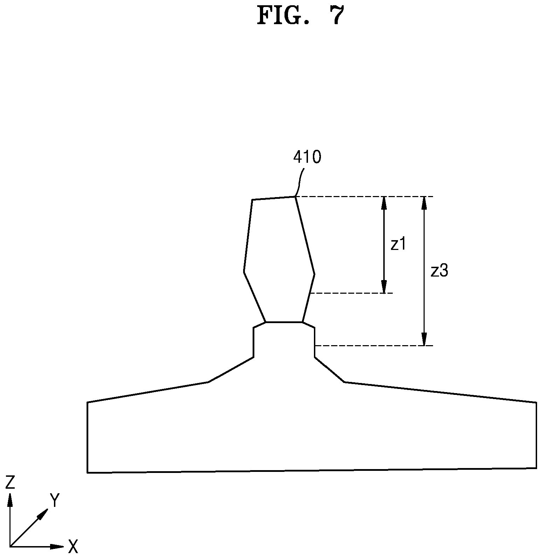

On the other hand, when the second diameter is greater than or equal to the smaller value among the first value and the second value, the image processing apparatus 100 may determine the third position apart by the third distance z3 in the z axis direction from the uppermost point 410 and obtain the third diameter corresponding to the third scan data from the uppermost point 410 to the third position, as illustrated in FIG. 7. In this case, the third distance z3 may be shorter than the second distance z2 and longer than the first distance z1. For example, the image processing apparatus 100 may determine a point, which corresponds to 1/3 of a distance between the first position and the second position, as the third position, and obtain the third diameter corresponding to the third data from the uppermost point 410 to the third position. However, the embodiment is not limited thereto.

The image processing apparatus 100 may obtain a third diameter corresponding to the third scan data, by a method identical to the method of obtaining the first diameter and the second diameter described with reference to FIG. 5. More particularly, the image processing apparatus 100 may obtain a third bounding box for the third scan data from the uppermost point 410 to the third position and determine a greater value of a size in the x axis direction or a size in the y axis direction of the third bounding box as the third diameter.

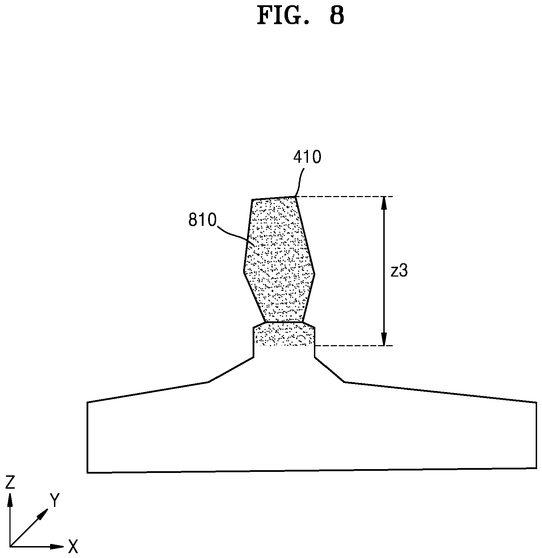

When the third diameter is less than the smaller value among the first value and the second value, the image processing apparatus 100 may set a region 810 from the uppermost point 410 to the third position as the region of interest, as illustrated in FIG. 8.

On the other hand, when the third diameter is less than or equal to the smaller value among the first value and the second value, the image processing apparatus 100 may obtain a fourth diameter corresponding to fourth scan data apart by a fourth distance, which is shorter than the third distance z3 and longer than the first distance z1, from the uppermost point 410, and compare the fourth diameter with the smaller value among the first value and the second value. Like this, the image processing apparatus 100 may determine a position at which a diameter corresponding to scan data from the uppermost point to a corresponding position is less than the smaller value among the first value and the second value, while reducing a distance in the z axis direction from the uppermost point 410. When the corresponding position is determined, the image processing apparatus 100 may set a region from the uppermost point to the corresponding position as the region of interest.

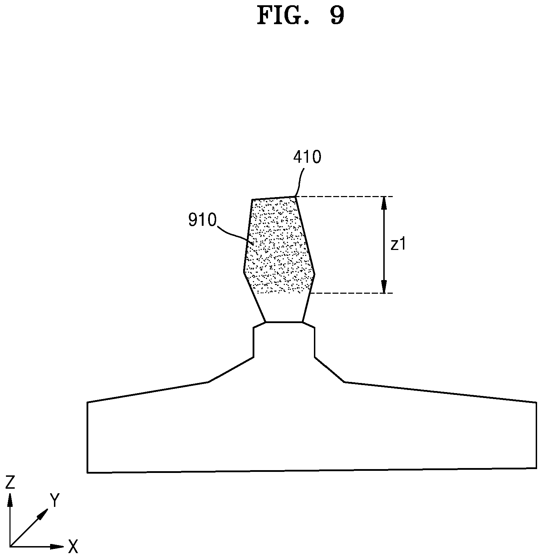

When the image processing apparatus 100 may not determine a position at which a diameter is less than the smaller value among the first value and the second value by repeating preset times of the operation of comparing the diameter with the smaller value among the first value and the second value while reducing the distance in the z axis direction from the uppermost point 410, the image processing apparatus 100 may set a region 910 from the uppermost point 410 to the first position as the region of interest, as illustrated in FIG. 9.

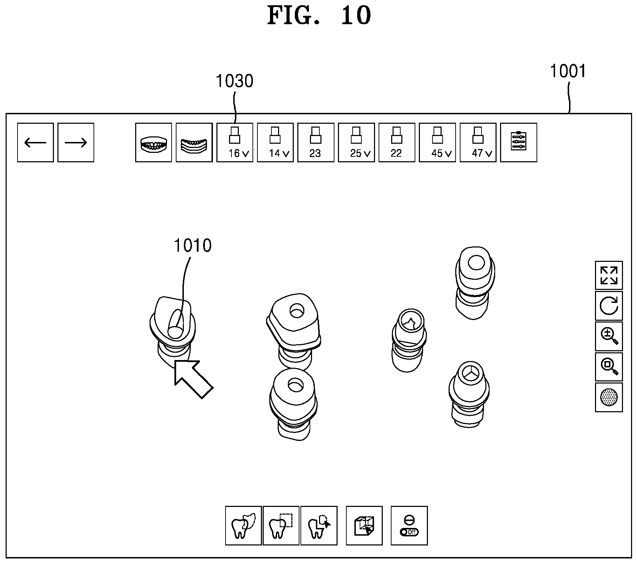

FIG. 10 is a diagram illustrating a screen in which a plurality of abutments according to an embodiment are scanned.

The image processing apparatus 100 according to an embodiment may obtain the scan data generated by scanning the plurality of abutments. For example, by scanning the plurality of abutment fixed to the jig at once by using the scanner, the image processing apparatus 100 may obtain scan data about the plurality of abutments.

The image processing apparatus 100 may automatically recognize regions of interest respectively corresponding to the plurality of abutments in the scan data, by using the method described with reference to FIGS. 4 to 9. The image processing apparatus 100 may display the scan data about the regions of interest that have been automatically recognized. For example, as illustrated in FIG. 10, the image processing apparatus 100 may only display the scan data about the regions of interest in a user interface screen 1001, without displaying scan data about other regions (e.g., the adhesive member or the jig) except the regions of interest.

To analyze and process data about the plurality of abutments, the image processing apparatus 100 according to an embodiment may assign which number of tooth the abutment corresponds to. Here, when a region corresponding to the abutment is not automatically set in the scan data, the user has to manually select the region of interest corresponding to the abutment from the scan data and assign the selected region to the number of the tooth.

On the other hand, the image processing apparatus 100 according to an embodiment automatically selects the region of interest corresponding to the abutment in the scan data, and therefore, the user does not have to manually set the region of interest corresponding to the abutment in the scan data.

For example, as illustrated in FIG. 10, the image processing apparatus 100 according to an embodiment may display regions of interest corresponding to the abutments on the user interface screen 1001. The image processing apparatus 100 may receive an input to select any one 1010 of the displayed regions of interest (the regions corresponding to the abutments), and the selected region of interest may be displayed in a color different from colors of other regions of interest. However, the embodiment is not limited thereto. In addition, the image processing apparatus 100 may display a tooth number menu including tooth number items on the user interface screen 1001. The image processing apparatus 100 may receive an input to select any one tooth number item 1030 included in the displayed tooth number menu.

When the input to select an abutment and the input to select the tooth number item are received, the image processing apparatus 100 may assign the selected abutment to a corresponding tooth number. Accordingly, the user may easily assign the abutment to the tooth number only using inputs to select the displayed region of interest and the tooth number item.

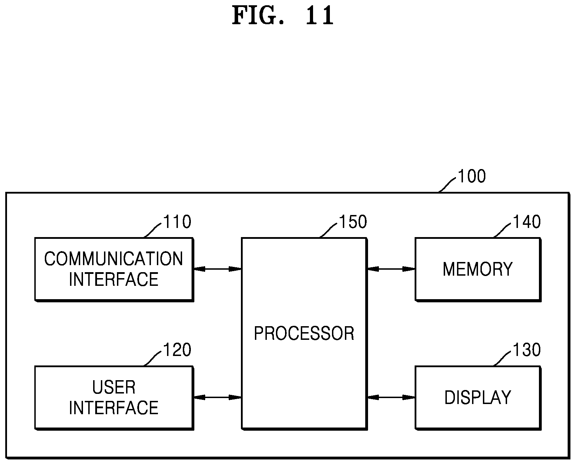

FIG. 11 is a block diagram illustrating an image processing apparatus according to an embodiment.

The image processing method illustrated in FIG. 2 may be performed through the image processing apparatus 100. Accordingly, the image processing method illustrated in FIG. 2 may be used as a flowchart illustrating operations of the image processing apparatus 100.

Referring to FIG. 11, the image processing apparatus 100 may include a communication interface 110, a user interface 120, the display 130, a memory 140, and a processor 150.

The communication interface 110 may be configured to perform communication with at least one external electronic device (e.g., the oral cavity scanner 10, a server, or an external medical instrument) through a wired or wireless communication network. The communication interface 110 may be configured to perform communication with at least one external electronic device under control of the processor 150.

More particularly, the communication interface 110 may include at least one near-field communication module configured to perform communications according to communication standards such as Bluetooth, Wireless Fidelity (Wi-Fi), Bluetooth Low Energy (BLUE), Near Field Communication (NFC)/Radio Frequency Identification (RFID), Wi-Fi Direct, Ultra-wideband (UWB), ZIGBEE, or the like.

In addition, the communication interface 110 may further include a telecommunication module configured to perform communication with a server configured to support telecommunication according to telecommunication protocols. More particularly, the communication interface 110 may include a telecommunication module configured to perform communication through a network for Internet communication. In addition, the communication interface 110 may include a telecommunication module configured to perform communication through a communication network according to communication protocols such as 3G, 4G, and/or 5G.

In addition, to perform wired communication with the external electronic device (e.g., the oral-cavity scanner), the communication interface 110 may include at least one port to be connected to the external electronic device through a wired cable. Accordingly, the communication interface 110 may perform communication with the external electronic device that is in wired connection through the at least one port.

The user interface 120 may be configured to receive the user input to control the image processing apparatus 100. The user interface 120 may include a user input device including a touch panel configured to sense touches of the user, a button configured to receive push operations by the user, a mouse or a keyboard configured to designate or select a point on the user interface screen, but the user interface 120 is not limited thereto.

In addition, the user interface 120 may include a voice recognition apparatus for voice recognition. For example, the voice recognition apparatus may include a microphone and receive voice instructions or voice requests of the user. Accordingly, the processor 150 may control performance of operations corresponding to the voice instructions or voice requests.

The display 130 is configured to display screens. More particularly, the display 130 may be configured to display certain screens under control of the processor 150. More particularly, the display 130 may be configured to display the user interface screen including an oral-cavity image generated by data obtained by scanning the oral cavity of the patient. Alternatively, the display 130 may be configured to display the user interface screen including an image of the target object generated based on the data obtained from the table scanner 50.

Alternatively, the display 130 may be configured to display the user interface screen including information about dental treatment of the patient.

The memory 140 may be configured to store at least one instruction. In addition, the memory 140 may be configured to store at least one instruction executed by the processor 150. Furthermore, the memory 140 may be configured to store at least one program executed by the processor 150. In addition, the memory 140 may be configured to store data received from the three-dimensional scanners 10 and 50 (e.g., the raw data obtained by scanning). Alternatively, the memory 140 may store images three-dimensionally illustrating the target object. The memory 140 according to an embodiment may include one or more instructions for automatically setting the region of interest corresponding to the object of interest from the image of the target object including the object of interest. The memory 140 according to an embodiment may include one or more instructions for executing the method disclosed herein to automatically setting the region of interest corresponding to the object of interest from the image of the target object including the object of interest.

The processor 150 executes at least one instruction stored in the memory and controls performance of intended operations. Here, the at least one instruction may be stored in an internal memory included in the processor 150 or the memory 140 included in a data processing apparatus independent of the processor.

More particularly, the processor 150 may execute at least one instruction and control at least one component included in the data processing apparatus such that the intended operations are performed. Accordingly, even when a case in which the process performs certain operations is described as an example, the description may indicate that the processor controls at least one component included in the data processing apparatus for performance of the certain operations.

The processor 150 according to an embodiment may be configured to generate the scan data based on the raw data received from the three-dimensional scanner, by executing at least one instruction stored in the memory 140. Here, the raw data may include the raw data by scanning the target object (e.g., a model in which an abutment attached to a jig, an oral cavity in which an abutment is arranged, and the like) including an abutment by using the three-dimensional scanner.

The processor 150 may be configured to automatically set the region of interest corresponding to the abutment in the scan data by executing one or more instructions stored in the memory 140. For example, when the scan data includes the data about the adhesive member or the jig in addition to the abutment, the processor 150 may automatically set the region of the scan data, which corresponds to the abutment, as the region of interest.

The processor 150 may be configured to determine the uppermost point in the z axis direction (the depth direction) in the scan data and obtain the first diameter corresponding to the first scan data from the uppermost point to the first position apart by a preset first distance in the z axis direction. In addition, the processor 150 may be configured to obtain the second diameter corresponding to the second scan data from the uppermost to the second position apart by a preset second distance in the z direction.

The processor 150 may be configured to determine the region of interest, based on the first diameter and the second diameter. The processor 150 may obtain the first value and compare a smaller value among the first value and a preset second value with the second diameter, based on the first diameter, and when the second diameter is less than the smaller value among the first value and the second value, may set a region from the uppermost point to the second position as the region of interest. On the other hand, when the second diameter is greater than or equal to the smaller value among the first value and the second value, the processor 150 may determine the third position apart by the third distance in the z direction from the uppermost point and obtain the third diameter corresponding to the third scan data from the uppermost point to the third position. Here, the third distance may be shorter than the second distance and longer than the first distance.

When the third diameter is less than the smaller value among the first value and the second value, the processor 150 may set the region from the uppermost point to the third position as the region of interest. On the other hand, when the third diameter is greater than or equal to the smaller value among the first value and the second value, the processor 150 may obtain the fourth diameter corresponding to the fourth scan data to the fourth position apart by the fourth distance from the uppermost point. Here, the fourth diameter may be shorter than the third distance and longer than the first distance.

The processor 150 may compare the fourth diameter with the smaller value among the first value and the second value. Like this, the processor 150 may determine a position at which the diameter corresponding to the scan data from the uppermost point to a corresponding point is less than the smaller value among the first value and the second value, while reducing a distance in the z axis direction from the uppermost point. When the corresponding position is determined, the processor 150 may set the region from the uppermost point to the corresponding position as the region of interest.

When the processor 150 may not determine the position at which the diameter is less than the smaller value among the first value and the second value by repeating preset times of the operation of comparing the diameter with the smaller value among the first value and the second value while reducing the distance in the z axis direction from the uppermost point, the processor 150 may set the region 910 from the uppermost point to the first position as the region of interest.

The processor 150 may execute one or more instructions stored in the memory 140, thereby controlling the display 130 to only display the scan data set as the region of interest in the scan data about the target object on the screen and not display the other regions.

Alternatively, the processor 150 may control the display 130 to display the scan data about the target object on the screen and display the region of interest so as to be distinguished from other regions.

The processor 150 according to an example may be implemented in the form including at least one internal processor and a memory device (e.g., random access memory (RAM), read-only memory (ROM), and the like) configured to store at least one of a program, an instruction, a signal, and data to be processed and used in the internal processor.

In addition, the processor 150 may include a graphic processing unit for processing graphics corresponding to videos. In addition, the processor may be implemented as a System On Chip (SoC) in which a core and a GPU are integrated. In addition, the processor may include a multi-core over a single core. For example, the processor may include a dual core, a triple core, a quad core, a hexa core, an octa core, a deca core, a dodeca core, a hexadecimal core, and the like.

In the embodiments disclosed herein, the processor 150 may be configured to generate images based on the two-directional images received from the three-dimensional scanners 10 and 50.

More particularly, under control of the processor 150, the communication interface 110 may receive the data obtained from the three-dimensional scanners 10 and 50, e.g., the raw data obtained by scanning. In addition, the processor 150 may generate a three-dimensional image three-dimensionally illustrating the target object based on the raw data received from the communication interface 110. For example, to restore the three-dimensional image according to a laser triangulation method, the three-dimensional scanners 10 and 50 may include a left (L) camera corresponding to a left field of view and a right (R) camera corresponding to a right field of view. In addition, the three-dimensional scanner may respectively obtain, from the L camera and the R camera, L image data corresponding to the left field of view and R image data corresponding to the right field of view. Consequently, the three-dimensional scanner may transmit the raw data including the L image data and the R image data, to the communication interface 110 of the image processing apparatus 100.

Then, the communication interface 110 may deliver the received raw data to the processor 150, and the processor 150 may generate an image three-dimensionally illustrating the target object, based on the delivered raw data.

In addition, the processor 150 may directly receive the image three-dimensionally illustrating the target object from external servers, medical instruments, and the like, by controlling the communication interface 110. In this case, the processor may obtain a three-dimensional image without generating the three-dimensional image based on the raw data.

According to embodiments disclosed herein, the description that the processor 150 performs operations such as 'extracting', 'obtaining', 'generating' may include a case where processor 150 controls other components such that the aforementioned operations are performed, as well as a case where the processor 150 executes at least one instruction and directly performs the aforementioned operations.

To implement embodiments disclosed herein, the image processing apparatus 100 may include only some of the components illustrated in FIG. 11, and may also include more components than the components illustrated in FIG. 11.

In addition, the image processing apparatus 100 may store and execute dedicated software linked to the three-dimensional scanners 10 and 50. Here, the dedicated software may be referred to as a dedicated program, a dedicated tool, or a dedicated application. When the image processing apparatus 100 is linked to the three-dimensional scanners 10 and 50 and performs operations, the dedicated software stored in the image processing apparatus 100 may be connected to the three-dimensional scanners 10 and 50 and receive in real time pieces of data obtained by scanning the target object. For example, in an i500 product, which is a three-dimensional scanner manufactured by Medit, there is dedicated software for processing the data obtained by scanning the target object. More particularly, Medit produces and distribute 'Medit Link', which is software for processing, managing, using, and/or transmitting the data obtained from the three-dimensional scanner (e.g., i500). Here, 'the dedicated software' indicates a program, a tool, an operation that may be operated in linkage with the three-dimensional scanner, and therefore, may be used in common for various three-dimensional scanners developed and merchandised by various manufacturers. In addition, the dedicated software mentioned above may be manufactured and distributed independent of the three-dimensional scanner scanning the target object.

The image processing apparatus 100 may be configured to store and execute dedicated software corresponding to an i500 product. The transmission software may be configured to at least one operations to obtain, process, store, and/or transmit images. Here, the dedicated software may be stored in the processor. In addition, the dedicated software may provide a user interface for use of data obtained from the three-dimensional scanner. Here, a user interface screen provided by the dedicated software may include images generated according to the disclosed embodiments.

The image processing method according to an embodiment of the disclosure may be implemented in the form of a program instruction that may be performed through various computer tools, and may be recoded in a computer-readable medium. In addition, embodiments of the present disclosure may relate to a computer-readable storage medium in which one or more programs including at least one instruction to execute the image processing method is recorded.

The computer-readable storage medium may include program instructions, data files, and data structures, individually or in combination. Here, examples of the computer-readable storage medium may include, magnetic media such a hard disk, a floppy disk, and a magnetic tape, optical media such as CD-ROM and DVD, magneto-optical media such as floptical disk, and a hardware device configured to store and execute program instructions such as ROM, RAM, a flash memory.

Here, a device-readable storage medium may be provided in the form of a non-transitory storage medium. Here, 'the non-transitory storage medium' may indicate that the storage medium is a tangible device. In addition, 'the non-transitory storage medium' may include a buffer temporarily storing data.

According to an embodiment, the image processing method according to various embodiments disclosed herein may be provided in a computer program product. The computer program product may be distributed in the form of a device-readable storage medium (e.g., a compact disc read only memory (CD-ROM)). Alternatively, the computer program product may be distributed directly or online (e.g., downloaded or uploaded) through an application store (e.g., a play store) or between two user devices (e.g., smartphones). More particularly, the computer program product according to the disclosed embodiment may include a storage medium in which a program including at least one program is recorded, to perform the image processing method according to the disclosed embodiments.

Although embodiments have been described above, the scope of the present disclosure is not limited thereto, and various forms of modification and improvement by those skilled in the art using basic concepts of the present disclosure, which are defined by the following claims, are also included in the scope of the present disclosure.

## Claims

1. An image processing method comprising:
obtaining scan data generated by scanning a target object comprising an object of interest;
automatically setting, in the scan data, a region of interest corresponding to the object of interest; and
displaying the region of interest.

2. The image processing method of claim 1, wherein the object of interest comprises an abutment.

3. The image processing method of claim 2, wherein the target object further comprises another object other than the abutment.

4. The image processing method of claim 1, further comprising receiving a user input to select a menu for automatically setting the region of interest.

5. The image processing method of claim 1, wherein
the automatic setting of the region of interest comprises
obtaining a first diameter corresponding to first scan data from an uppermost point of the target object to a first position apart by a first distance in a depth direction from the uppermost point;
obtaining a second diameter corresponding to second scan data from the uppermost point to a second position apart by a second distance greater than the first distance in the depth direction from the uppermost point; and
setting a region from the uppermost point to the second position as the region of interest, based on the first diameter and the second diameter.

6. The image processing method of claim 5, wherein,
the setting of the region from the uppermost point to the second position as the region of interest, based on the first diameter and the second diameter, comprises:
obtaining a first value, based on the first diameter; and
setting the region from the uppermost point to the second position as the region of interest, when the second diameter is less than a smaller value among the first value and a preset second value.

7. The image processing method of claim 6, wherein
the setting of the region from the uppermost point of the target object to the second position as the region of interest, based on the first diameter and the second diameter, comprises:
obtaining a third diameter corresponding to third scan data from the uppermost point to a third position apart by a third distance from the uppermost point, when the second diameter is greater than or equal to the smaller value among the first value and the second value, wherein the third distance is greater than the first distance and less than the second distance; and
setting the region of interest, based on the first diameter and the third diameter.

8. The image processing method of claim 7, wherein
the setting of the region of interest comprises:
setting a region from the uppermost point to the third position as the region of interest, when the third diameter is less than the smaller value among the first value and the second value; and
setting a region from the uppermost point to the first position as the region of interest, when the third diameter is equal to or greater than the smaller value among the first value and the second value.

9. The image processing method of claim 1, wherein
the displaying of the region of interest comprises displaying the region of interest in the scan data so as to be distinguished from other regions.

10. An image processing apparatus comprising:
a display;
a memory storing one or more instructions; and
a processor, wherein
the processor is configured to, by executing the one or more instructions stored in the memory,
obtain scan data generated by scanning a target object comprising an object of interest,
automatically set a region of interest corresponding to the object of interest, in the scan data, and
control the display to display the region of interest.

11. The image processing apparatus of claim 10, wherein the object of interest includes an abutment.

12. The image processing apparatus of claim 11, wherein the target object further comprises another object other than the abutment.

13. The image processing apparatus of claim 10, further comprising a user interface configured to receive a user input to select a menu for automatically setting the region of interest.

14. The image processing apparatus of claim 10, wherein
the processor is further configured to, by executing the one or more instructions stored in the memory,
obtain a first diameter corresponding to first scan data from an uppermost point of the target object to a first position apart by a first distance in a depth direction from the uppermost point,
obtain a second diameter corresponding to second scan data from the uppermost point to a second position apart by a second distance greater than the first distance in the depth direction from the uppermost point; and
set a region from the uppermost point to the second position as the region of interest, based on the first diameter and the second diameter.

15. The image processing apparatus of claim 14, wherein,
the processor is further configured to, by executing the one or more instructions stored in the memory,
obtain a first value, based on the first diameter, and
set a region from the uppermost point to the second position as the region of interest, when the second diameter is less than a smaller value among the first value and a preset second value.

16. The image processing apparatus of claim 15, wherein
the processor is further configured to, by executing the one or more instructions stored in the memory,
obtain a third diameter corresponding to third scan data from the uppermost point to a third position apart by a third distance from the uppermost point, when the second diameter is greater than or equal to the smaller value among the first value and the second value, wherein the third distance is greater than the first distance and less than the second distance, and
set the region of interest, based on the first diameter and the third diameter.

17. The image processing apparatus of claim 16, wherein
the processor is further configured to, by executing the one or more instructions stored in the memory,
set a region from the uppermost point to the third position as the region of interest, when the third diameter is less than the smaller value among the first value and the second value, and
set a region from the uppermost point to the first position as the region of interest, when the third diameter is equal to or greater than the smaller value among the first value and the second value.

18. The image processing apparatus of claim 10, wherein
the processor is further configured to, by executing the one or more instructions stored in the memory,
control the display to display the region of interest in the scan data so as to be distinguished from other regions.

19. A computer-readable recording medium having recorded thereon a program comprising at least one instruction for performing an image processing method by using a computer, wherein the image processing method comprises:
obtaining scan data obtained by scanning a target object including an object of interest;
automatically setting, in the scan data, a region of interest corresponding to the object of interest; and
displaying the region of interest.
